# EUROPEAN PATENT SPECIFICATION

(11) **EP 2 104 857 B1**
(45) Date of publication and mention of the grant of the patent: **04.04.2018**
(21) Application number: 08701503.8
(22) Date of filing: 15.01.2008
(51) Int. Cl.: G01N 35/10, G01N 35/00

(54) **COLLECTION OF LIQUID ANALYTICAL SAMPLES FOR CLINICAL ANALYTICAL PURPOSE**
ENTNAHME VON FLÜSSIGEN ANALYSEPROBEN ZUM ZWECK DER KLINISCHEN ANALYSE
COLLECTE D'ÉCHANTILLONS ANALYTIQUES LIQUIDES À DES FINS D'ANALYSES CLINIQUES

(30) Priority: 16.01.2007 EP 07000762
(43) Date of publication of application: 30.09.2009
(73) Proprietor: Roche Diagnostics GmbH, 68305 Mannheim (DE); F. Hoffmann-La Roche AG, 4070 Basel (CH)
(72) Inventor: GAGNAUX, Louis-Pierre, CH-8932 Mettmenstetten (CH); VEEN, Gerhard, 79618 Rheinfelden (DE)
(74) Representative: Troesch Scheidegger Werner AG
(86) International application number: PCT/EP2008/050394
(87) International publication number: WO 2008/087138

(56) References cited:
- WO-A-91/15768
- WO-A-91/16675
- WO-A-95/03431
- JP-A- 54 123 090
- US-A- 4 678 641
- US-A- 5 133 218
- US-A- 5 960 530
- US-A1- 2006 088 836

## Description

The present invention refers to a process for the collection of a liquid analytical sample consisting of a liquid mono-phase or layer according to the introduction of claim 1. In particular, the present invention refers to the removal of application interfering compounds as undesired contaminants disposed to a large extent at or near the sample surface and analysis of various clinical chemistry analytes, primarily from lithium-heparin tubes.
Testing of blood samples, being provided in plasma-tubes such as lithium-heparin plasma-tubes and the like suffer from the disadvantage, that duplicate errors in measurement of e.g. lactate dehydrogenase may be observed which is of course unacceptable.
The reason for the errors can be the presence of cell aggregates, the presence of silicon-based surfactants of polypropylene oxide, which are used as coatings for the interior tube-wall, silicon oils, which are used at the phlebotomy device to collect the blood from a patient, additives to prevent the formation of thrombocytes, separation gel residues, etc. Furthermore stoppers of tubes may also be coated with lubricant to facilitate their removal and to maintain the lower pressure inside the e.g. evacuated tubes. Surfactants are also a common component of many immunoassays. They are used to decrease or illuminate non-specific absorption, improve stability of the reactions or modify the solid-phase surface to render it less hydrophobic and thus minimize loss of non-convalently bound antibody inclusion of surfactants in immunoassay regions.
Especially affected from the reported drawbacks are analytes such as Na, K, LDH (lactate dehydrogenase), ALP (alkaline phosphatase), Ca and total proteins. The errors which are observed are:
1. A too low or a too high aspirated sample volume, what leads to a wrong recovery of the analyte (especially observed at absorbance tests due to the low volume of the samples, typically 2 to 5µl).
2. Deposition of fibrin and/or "silicon oil" at various device parts (pipetting needle, ISE mixing towers, etc.).
As a result a modified method is proposed in the art [1] with a pre-dilution step to minimize duplicate errors by diluting the sample in saline and then re-sampling. This reduces the risk of re-aspirating the same micro-clots that may have been aspirated in the primary sampling. However the potential for inaccuracies with the actual primary sampling as a result of micro-clots are not eliminated, even if the duplicate readings are within expected limits.
In addition the amount of required plasma material is higher and the throughput of the system, expressed in test results per hour, goes down.

Furthermore there is the possibility of serum samples to substantially reduce duplicate errors and the differences between duplicate readings would not be considered clinically significant.
In the patent application JP 54 123090 A a pipetting process is shown, comprising the steps:
- providing a sample,
- providing a first pipetting device with a pipette,
- aspirating with said pipette a portion of liquid from the top layer and discharging said portion,
- providing a second pipetting device comprising a second pipette,
- aspirating a volume of liquid from the bottom layer by said second pipetting device, and
- discharging said volume of liquid by said second pipetting device.
The patent application WO 91/16675 concerns an automated molecular biology laboratory comprising a wash station for washing the pipette tip between liquid transfer to avoid carryover type cross-contamination.
US patent 4,678,641 addresses an isolation liquid layer retention device comprising a porous member that operable to cause an aqueous liquid to form a generally convex meniscus to strongly support the generally denser isolation liquid layer thereon to prevent the sinking of the isolation liquid into the aqueous liquid.

It is an object of the present invention to improve the results of measurements and to reduce the risk of duplicate errors at the analysis of liquid analytical chemistry samples such as e.g. blood plasma samples, while keeping the labor and time effort for the analytical process at a low and reasonable level.
Proposed is a process according to the wording of claim 1.
The inventive solution consists in collecting prior to the first effective volume collection of a liquid analytical sample consisting of a liquid mono-phase or layer, at least one first portion in advance, this first sample in advance being collected from the surface area, just underneath or at a distance from the surface of the liquid analyte sample for being disposed separately. After sampling this first portion in advance the effective volume collection takes place using a different aspirating device such as a pipetting needle. In particular, the inventive process comprises the steps of
a) providing a liquid analytical sample consisting of a liquid mono-phase or layer,
b) providing a first pipetting device, comprising a first reusable pipetting needle,
c) aspirating by said first pipetting device a portion of the liquid sample from the surface area, comprising undesired contaminants and discarding said portion,
d) washing said first reusable needle with washing liquid,
e) providing a second pipetting device, comprising a second reusable pipetting needle or a pipetting device with a disposable pipetting tip,
f) aspirating a volume of liquid analytical sample by said second pipetting device,
g) discharging said volume of analytical sample for being analysed, and
h) washing said second reusable needle with washing liquid or disposing the disposable tip of said pipetting device.

In other words, before pipetting the first regular volume of liquid analytical sample, a defined portion will be pipetted in advance from the sample surface, just underneath or at a distance from the surface by using a first pipetting device comprising a first reusable pipetting needle. This first portion in advance being discharged afterwards and not used for analytical purpose. This so called "dummy pipetting" shall be discharged e.g. in a waste container. The depths of the needle for the removal of the first volume in advance is of course dependent upon the presence of any components or elements, which could interfere with the analysis and which are typically present in the upper region i.e. near the surface of the sample to be analyzed. These interfering components or elements are called contaminants. Examples of these contaminants are cell aggregates, droplets or suspensions of silicone oils, mineral oils, lubricants, or the like, additives to prevent the formation of thrombocytes, surfactants, fibrin clots.
After this so called "dummy pipetting" the effective volume collection of liquid analytical sample will take place by using a second pipetting device comprising a second reusable pipetting needle or a pipetting device comoprising a disposable pipetting tip. The volume to be collected is typically smaller than the volume being aspirated during the first portion collection in advance. A typical volume being collected for analytical purpose is < 10µl, preferably 2 to 5 µl.
Within the present invention no separation reagent is added to separate the sample to be analyzed from contaminants. A liquid analytical sample according to the present invention is the liquid component of an analytical body fluid, typically blood, comprising one or more analytes of interest. An example of liquid analytical sample is plasma separated from the non-liquid or particulate component of blood such as red blood cells. The non-liquid or particulate component of a blood sample may still be present in the sample tube, at the bottom, e.g. after sedimentation or centrifugation.
According to the present invention, the analytes of interest are typical analytes of clinical chemistry tests and which are homogeneously distributed in the liquid analytical sample. This means that the liquid analytical sample at the moment of pipetting and being analyzed typically consists, at least to a large extent, of a liquid monophase or layer. Exemples of analytes of interest are Na, K, LDH, ALP, Ca, total proteins, etc.

The pipetting procedure can be easily executed and automated, as the pipetting can be done relatively unprecisely, as it has not to be done at an exact distance from the sample surface, meaning within a very narrow and distinct layer. As a result, the analytical process according the present invention is easy and can be automated, nevertheless ensuring reliable results.
In order to further optimize the process, it is proposed to first insert a certain volume of washing liquid, e.g. water, into the reusable pipetting needles before collecting volumes of sample. By first inserting a certain wash liquid volume into the needle , traces of the previous sample will be washed away when or after discharging the sample volume, and the needle will be cleaned before the next use. This of course is very important for not contaminating the next sample, when the same first pipetting device is used again for collecting the first portion in advance at the next e.g. plasma tube. The effective volume of liquid analytical sample shall be collected by a second device as e.g. a pipetting device, the amount of the effective volume being lower than the volume of the first portion in advance. This effective volume can now be used for analytical purpose for the determination of the respective analytes of interest. The analytical process as such is well-known in the art and shall not be described at this stage. Preferably the reusable needle is also washed from the outside by using a washing liquid and for this a washing unit is preferably provided.
Preferably, a certain volume of separating phase is also introduced into the reusable needle for separating the washing liquid from the aspirated portion or sample volume. This may help to prevent contamination and/or dilution of the liquid analytical sample with wash liquid. Preferably, this separating phase is an air plug.
Further realization of the process shall be defined in dependent claims.

The invention shall be described for example with reference to the attached figures, in which possible examples of the process and the device are shown.
In the figures
- fig. 1: shows schematically and step-by-step a possible layout of the sampling procedure according to the present invention, and
- fig. 2: shows schematically a further possible layout of the sampling procedure according to the present invention.

First of all, a pipetting device 1 including a pipetting needle 3 is inserted through a cover 6 of a sample tube 5 into a liquid analytical sample 7. Within the liquid analytical sample 7, at least one analyte 9 of interest is homogeneously distributed. In the area of the surface 8 of the analytical sample 7 contaminants 11 are present. Within the needle 3 of the pipetting device 1, a washing liquid 13 is arranged.

In a first step A), a first portion is aspirated through the needle-tip 4 into the needle 3, containing the contaminants 11. While inserting the first portion, an air plug 15 occurs between the washing liquid 13 and first pre-sample portion.
In a successive step B), the pipetting device 1 is removed from the sample tube 5 and is transported to a waste container 21, where the first portion, comprising the contaminants 11, is disposed, together with the washing liquid 13. In other words, at the same time during step B), the first pre-sample portion is disposed and the collecting needle 3 is cleaned by the washing liquid.
In a successive step C), a second pipetting device 2 is inserted through the top cover 6 into the liquid analytical sample 7, arranged within the sample tube 5. Within the collecting needle 23 of the pipetting device 2, again a washing liquid 33 is arranged.
In a following step D), a second volume 37 is aspired into the collecting needle 23 via the needle-tip 24.
In the following step E), the pipetting device 2 is transported to a cuvette for analysis 39, where the second sample volume 37 is disposed for analytical purpose.
In a successive step F), the pipetting device 2 is further transported to a waste container 41, where the collecting needle 23 is cleaned by disposing the washing liquid 33. Being cleaned, the pipetting device, together with the pipetting needle 23, can be reused for a further volume collecting step.

The described process could be executed e.g. with a COBAS INTEGRA 800 diagnostic device of Hoffmann-La Roche, which is a sample cassetting system for liquid analytical samples to be analysed using e.g. Li-heparin plasma tubes. Of course this device is only an example and the preceding description could be also brought into a relation to other devices known in the art e.g. from Hitachi (as manufacturer of Clinical Chemistry analyser) or Becton-Dickinson (as manufacturer of blood collecting devices), etc.
From the inserted plasma sample tubes into the cassetting device mentioned as an example, before the first regular sample volume pipetting step only once a defined first portion in advance such as e.g. 100µl shall be collected. Of course the sample portion to be precollected is dependent upon the total volume within the plasma sample tube. After collection of the first sample portion the pipetting device shall be removed from the plasma sample tube and arranged at a washing device as e.g. a washing unit. As before executing the pipetting process a certain amount of wash water as explained has been included into the pipetting needle, so that the pre-collected sample can be disposed into a waste container and at the same process step the inside of the pipetting needle is washed with the washing liquid, which is arranged above the precollected sample. Furthermore the needle is washed within the washing tower to be ready for a further precollecting step at the next plasma tube.
With a second pipetting needle the effective volume of liquid analytical sample to be analyzed shall be collected from the sample tube. The sample volume is typically smaller than the volume of the pre-collected sample. Sample volumes for analytical biochemical purposes e.g. of blood plasma samples are in the range between 2 and 10µl, typically 2 to 5µl. Due to the fact that most of the possible contaminants are removed, it can be expected that within the effective collected liquid analytical sample practically no or negligible amounts of contaminants are present which could effect the analytical result. In other words, it can be expected that so called duplicate errors will not occur anymore by using the inventive proposed two-step pipetting process as described above.
After collection of the analytical sample volume it shall be injected e.g. into a respective analytical arrangement for executing the analysis process, which is known in the art and shall not be described in details at this stage.
Of course dependent of the kind of tube, the tube volume and the type of analysis to the executed, the volume of the pre-collected first portion in advance, the depths of the needle tip may vary as well as the volume of the effective volume, being collected in the second step.

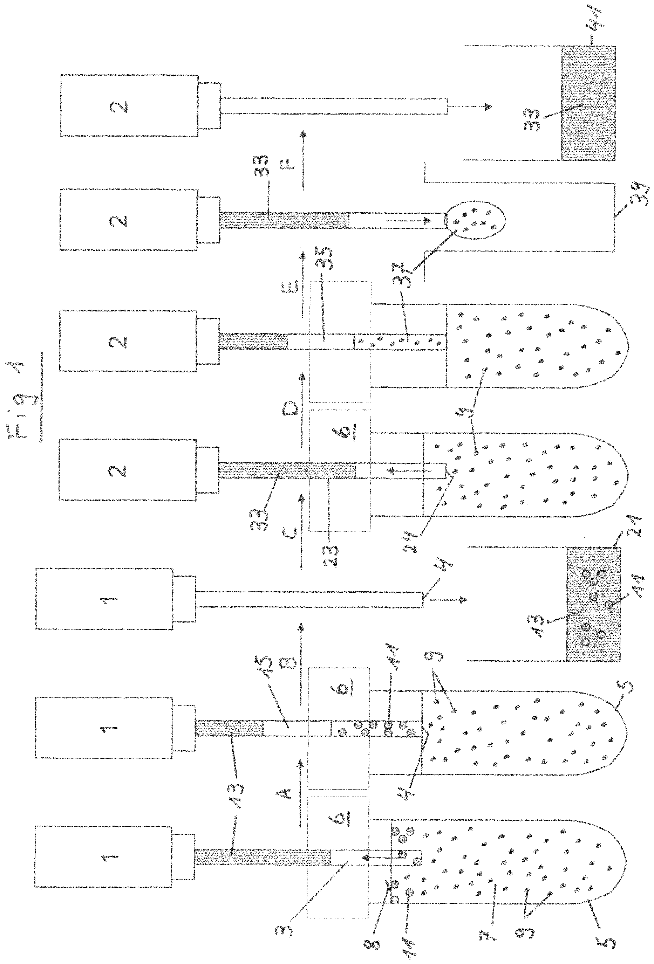

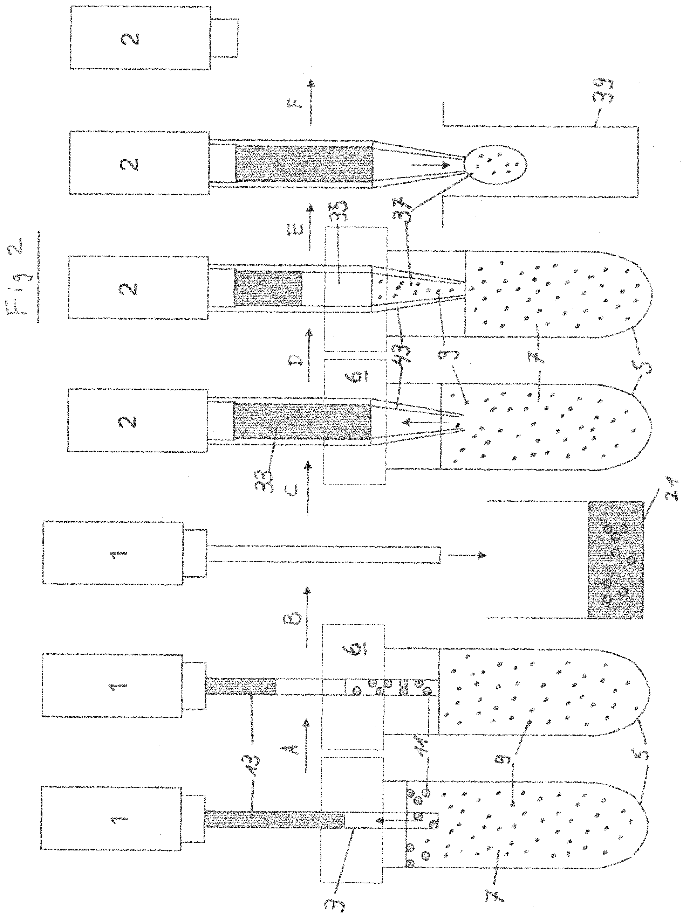

In fig. 2, again schematically and step-by-step, a very similar layout of the inventive process is described, with the difference that at the second pipetting device, a disposable pipetting needle or tip 43 is arranged. In other words, step A) and B) are equivalent to the respective steps in fig. 1. At step C), a new pipetting tip 43 has to be arranged for the further collection of the liquid sample volume 37, which is collected in step D).

In the following step E), again the pipetting device 2 is transported to a cuvette for analysis 39, where the second sample volume 37 is disposed. In the following step F), no washing of the needle 43 is necessary, as it will be simply disposed and not used anymore for a further collection of sample volumes.
Of course, the same is also possible with pipetting device 1, where also a disposable pipetting needle can be used. After the effective sampling process further effective samples may be collected e.g. for other tests. Further collections may be executed.
Figures 1 and 2 as well as the respective description are only showing and mentioning examples for further explaining the present invention. The invention of course is not at all limited to the figures and the respective descriptions and the invention is of course not at all limited to the mentioned Roche device which was the basis for the descriptions of the drawings. Furthermore different kinds of tubes or containers may be used to provide e.g. blood samples for analytical purpose. The first sample portion collection could happen e.g. more or less directly from the surface layer, could be done just beneath the surface layer or could be executed at a distance from the surface layer dependent upon the range or area, in which the non-desired and interfering components and elements are present within the sample to be analysed.

### Lit:

[1] Clinical Chemistry 50, No. 12, 2004, p. 2391-92

## Claims

1. A process for the collection of a volume of a liquid analytical sample (37) consisting of a liquid mono-phase or layer, the liquid analytical sample (7) comprising undesired contaminants (11) disposed to a large extent at or near the surface (8), the process comprising the following steps:
a) providing a liquid analytical sample (7) comprising at least one analyte (9) of interest,
b) providing a first pipetting device (1) comprising a first reusable pipetting needle (3),
c) aspirating by said first pipetting device (1) a portion of the liquid sample (7) from the surface (8) area comprising undesired contaminants (11) and discarding said portion,
d) washing said first reusable needle (3) with washing liquid (13),
e) providing a second pipetting device (2) comprising a second reusable pipetting needle (23) or a pipetting device with a disposable pipetting tip (43),
f) aspirating a volume of liquid analytical sample (37) by said second pipetting device (2),
g) discharging said volume of analytical sample (37) for being analyzed,
h) washing said second reusable needle (23) with washing liquid (33) or disposing the disposable tip (43) of said pipetting device (2).

2. Process according to claim 1, wherein washing said reusable needle (3, 23) comprises the step of inserting a certain volume of washing liquid (13, 33) into the reusable needle (3, 23) before aspirating a volume of liquid sample (7, 37).

3. Process according to claim 2, wherein washing said reusable needle (3, 23) further comprises the step of inserting a certain volume separating phase into the reusable needle (3, 23) for separating the washing liquid (13, 33) from the aspirated volume of liquid sample (7, 37).

4. Process according to claim 3, wherein the separating phase is an air plug (15).

5. Process according to any of the claims 2 to 4, wherein washing said reusable needle (3, 23) occurs by passing and discharging the inserted volume of washing liquid (13, 33) through the part of said needle (3, 23) which was occupied by the liquid sample (7) after discharging the volume of aspirated liquid sample (7, 37).

6. Process according to any of the claims 2 to 5, wherein washing said reusable needle (3, 23) further comprises the step of washing the reusable needle (3, 23) from the outside with washing liquid (13, 33).

7. Process according to any of the claims 1 to 6, wherein the liquid sample (7) is a body fluid.

8. Process according to claim 7, wherein the at least one analyte (9) of interest is a clinical chemistry analyte.

## Patentansprüche

1. Verfahren für die Sammlung eines Volumens einer flüssigen analytischen Probe (37) bestehend aus einer flüssigen Monophase oder Schicht, wobei die flüssige analytische Probe (7) unerwünschte Verunreinigungen (11) umfasst, welche zu einem grossen Teil an oder nahe der Oberfläche (8) verteilt sind, wobei das Verfahren die folgenden Schritte umfasst:
a) Bereitstellen einer flüssigen analytischen Probe (7), die mindestens einen Analyten (9) von Interesse umfasst,
b) Bereitstellen einer ersten Pipettiervorrichtung (1), die eine erste wiederverwendbare Pipettiernadel (3) umfasst,
c) Aspirieren eines Teils der flüssigen Probe (7) aus dem, die unerwünschten Verunreinigungen (11) umfassenden Bereich der Oberfläche (8) mittels besagter ersten Pipettiervorrichtung (1) und Verwerfen des besagten Teils,
d) Waschen besagter ersten wiederverwendbaren Nadel (3) mit Waschflüssigkeit (13),
e) Bereitstellen einer zweiten Pipettiervorrichtung (2), die eine zweite wiederverwendbare Pipettiernadel (23) umfasst, oder einer Pipettiervorrichtung mit einer Einwegpipettenspitze (43),
f) Aspirieren eines Volumens der flüssigen analytischen Probe (37) mittels besagter zweiten Pipettiervorrichtung (2),
g) Ablassen besagten Volumens der analytischen Probe (37), um analysiert zu werden,
h) Waschen besagter zweiter wiederverwendbarer Nadel (23) mit Waschflüssigkeit (33) oder Wegwerfen der Einwegpipettenspitze (43) besagter Pipettiervorrichtung (2).

2. Verfahren nach Anspruch 1, wobei das Waschen besagter wiederverwendbarer Nadel (3, 23) den Schritt des Einbringens eines bestimmten Volumens an Waschflüssigkeit (13, 33) in die wiederverwendbare Nadel (3, 23) vor dem Aspirieren eines Volumens flüssiger Probe (7, 37) umfasst.

3. Verfahren nach Anspruch 2, wobei das Waschen besagter wiederverwendbarer Nadel (3, 23) weiter den Schritt des Einbringens eines bestimmten Volumens Trennphase in die wiederverwendbare Nadel (3, 23) zum Trennen der Waschflüssigkeit (13, 33) von dem aspirierten Volumen flüssiger Probe (7, 37) umfasst.

4. Verfahren nach Anspruch 3, wobei die Trennphase ein Luftpfropfen (15) ist.

5. Verfahren nach einem der Ansprüche 2 bis 4, wobei das Waschen besagter wiederverwendbarer Nadel (3, 23) stattfindet mittels Leiten und Ablassen des eingebrachten Volumens an Waschflüssigkeit (13, 33) durch den Teil besagter Nadel (3, 23), welcher nach dem Ablassen des Volumens an aspirierter flüssiger Probe (7, 37) von der flüssigen Probe (7) besetzt war.

6. Verfahren nach einem der Ansprüche 2 bis 5, wobei das Waschen besagter wiederverwendbarer Nadel (3, 23) weiter den Schritt des Waschens der wiederverwendbaren Nadel (3, 23) von aussen mit Waschflüssigkeit (13, 33) umfasst.

7. Verfahren nach einem der Ansprüche 1 bis 6, wobei die flüssige Probe (7) eine Körperflüssigkeit ist.

8. Verfahren nach Anspruch 7, wobei der mindestens eine Analyt (9) von Interesse ein klinischer Chemie-Analyt ist.

## Revendications

1. Processus de collecte d'un volume d'un échantillon analytique liquide (37) consistant en une monophase liquide ou une couche, l'échantillon analytique liquide (7) comprenant des contaminants indésirables (11) disposés dans une grande mesure à la surface (8) ou près de celle-ci, le processus comprenant les étapes suivantes consistant à :
a) fournir un échantillon analytique liquide (7) comprenant au moins un analyte intéressant (9),
b) fournir un premier dispositif de pipetage (1) comprenant une première aiguille de pipetage réutilisable (3),
c) aspirer au moyen dudit premier dispositif de pipetage (1) une partie de l'échantillon liquide (7) de la zone de surface (8) contenant les contaminants indésirables (11) et rejeter ladite partie,
d) laver ladite première aiguille réutilisable (3) avec un liquide de lavage (13),
e) fournir un deuxième dispositif de pipetage (2) comprenant une deuxième aiguille de pipetage réutilisable (23), ou un dispositif de pipetage avec un embout de pipetage jetable (43),
f) aspirer un volume de l'échantillon analytique liquide (37) par le biais dudit deuxième dispositif de pipetage (2),
g) expulser ledit volume d'échantillon analytique (37) pour analyse,
h) laver ladite deuxième aiguille réutilisable (23) avec un liquide de lavage (33) ou jeter l'embout jetable (43) dudit dispositif de pipetage (2).

2. Processus selon la revendication 1, dans lequel le lavage de ladite aiguille réutilisable (3, 23) comprend l'étape consistant à insérer un certain volume de liquide de lavage (13, 33) dans l'aiguille réutilisable (3, 23) avant d'aspirer un volume d'échantillon liquide (7, 37).

3. Processus selon la revendication 2, dans lequel le lavage de ladite aiguille réutilisable (3, 23) comprend en outre l'étape consistant à insérer un certain volume de phase de séparation dans l'aiguille réutilisable (3, 23) pour séparer le liquide de lavage (13, 33) du volume aspiré de l'échantillon liquide (7, 37).

4. Processus selon la revendication 3, dans lequel la phase de séparation est un raccord d'air (15).

5. Processus selon l'une des revendications 2 à 4, dans lequel le lavage de ladite aiguille réutilisable (3, 23) se fait en faisant passer et en rejetant le volume inséré de liquide de lavage (13, 33) à travers la partie de ladite aiguille (3, 23) qui a été occupée par l'échantillon liquide (7) après avoir expulsé le volume d'échantillon liquide aspiré (7, 37).

6. Processus selon l'une des revendications 2 à 5, dans lequel le lavage de ladite aiguille réutilisable (3, 23) comprend en outre l'étape consistant à laver l'aiguille réutilisable (3, 23) depuis l'extérieur avec un liquide de lavage (13, 33).

7. Processus selon l'une des revendications 1 à 6, dans lequel l'échantillon liquide (7) est un fluide corporel.

8. Processus selon la revendication 7, dans lequel le au moins un analyte intéressant (9) est un analyte de chimie clinique.
